(19) **Europäisches Patentamt / European Patent Office / Office européen des brevets**

(11) **EP 4 674 900 A1**

(12) **EUROPEAN PATENT APPLICATION**
published in accordance with Art. 153(4) EPC

(43) Date of publication:
**07.01.2026 Bulletin 2026/02**

(21) Application number: **24763885.1**

(22) Date of filing: **27.02.2024**

(51) International Patent Classification (IPC):
$C08J\ 5/18^{(2006.01)}$    $C08F\ 8/12^{(2006.01)}$
$C08F\ 16/06^{(2006.01)}$    $C08L\ 29/04^{(2006.01)}$
$G02B\ 5/30^{(2006.01)}$

(52) Cooperative Patent Classification (CPC):
**C08F 8/12; C08F 16/06; C08J 5/18; C08L 29/04; G02B 5/30**

(86) International application number:
**PCT/JP2024/006963**

(87) International publication number:
**WO 2024/181406 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023029429**
**14.06.2023 JP 2023097540**

(71) Applicant: **Mitsubishi Chemical Corporation**
**Tokyo 100-8251 (JP)**

(72) Inventors:
• **YOSHIMOTO, Sae**
  **Tokyo 100-8251 (JP)**
• **KANETA, Kenji**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **POLYVINYL ALCOHOL-BASED RESIN FILM, OPTICAL FILM, WATER-SOLUBLE FILM, AND POLYVINYL ALCOHOL-BASED RESIN COMPOSITION**

(57)    A polyvinyl alcohol resin film is provided as follows, which can achieve, even with a smaller amount of additives used, the effect of further reducing internal haze caused by additives as well as the effect of further reducing external haze by controlling irregularities near the film surface by improving releasability and the like. A polyvinyl alcohol resin film contains a polyvinyl alcohol resin (A). The polyvinyl alcohol resin (A) contains radiocarbon C14, and the polyvinyl alcohol resin film has a total haze of 1.9 or less.

EP 4 674 900 A1

**Description**

TECHNICAL FIELD

The present disclosure relates to a polyvinyl alcohol resin film, an optical film, a water-soluble film, and a polyvinyl alcohol resin composition.

BACKGROUND ART

Conventionally, polyvinyl alcohol resins have been applied in a wide range of fields because of their excellent properties and diversity in quality. They are excellent in gas barrier properties, mechanical strength, transparency, glossiness, water solubility, and the like and are used in a wide range of fields, including optical film applications, packaging for food and healthcare applications, medical infusion bags, packaging for various chemical agents such as liquid detergents and agricultural chemicals, and seed tapes containing seeds.

Films made of these polyvinyl alcohol resins are manufactured by dissolving a polyvinyl alcohol resin in a solvent such as water to prepare a raw solution, then forming a film by a casting method using a casting mold such as a metal roll or a belt, and drying the film using a metal heat roll, a floating dryer, or the like.

Films made of polyvinyl alcohol resins are widely used as polarizing films for optical applications and as individual packaging films for food, healthcare, and liquid detergents, as described above. When it comes to the film performance required in these applications in recent years, for example, in optical applications, with higher resolution and higher definition of screens of liquid crystal TVs and the like, there has been a demand for even more excellent transparency than conventional products.

In liquid detergent packaging applications, there is a trend toward focusing on package designs that add a sense of luxury through color schemes and designs for liquid detergents as a means for enhancing product value. There has been a demand for polyvinyl alcohol films with even more excellent transparency than conventional products.

In response to these demands, for example, JP-A-2006-308938discloses a method for improving transparency by using a polyvinyl alcohol resin with a high degree of polymerization and a polyvinyl alcohol resin with a low degree of polymerization and reducing the difference in saponification degree between these two polyvinyl alcohol resins (see JP-A-2006-308938).

Further, there is disclosed a method for obtaining a high-quality optical film with a low haze that can suppress occurrence of droplets in the resulting polyvinyl alcohol film by adding a specific surfactant in a film-forming material (an aqueous solution of a polyvinyl alcohol resin) (see JP-A-2012-82313).

Furthermore, there is disclosed a method for reducing the number of dark defects per unit area of film to 50 or less by performing pressure heat treatment for an aqueous solution of a polyvinyl alcohol resin at a pressure of 0.10 to 1.0 MPa, a temperature of 130°C or higher, and a humidity of 90%RH or higher for 1 hour or longer (see WO-A-2019/189684).

RELATED ART DOCUMENT

PATENT DOCUMENT

JP-A-2006-308938
JP-A-2012-82313
WO-A-2019/189684

SUMMARY

PROBLEMS TO BE SOLVED BY THE DISCLOSURE

However, in the method described in JP-A-2006-308938, since the molecular weights of the two polyvinyl alcohol resins differ by more than 20000, one of the polyvinyl alcohol resins tends to precipitate during film formation, and such a precipitate is likely to increase the surface roughness of the polyvinyl alcohol film and the number of defects in the film. In the method described in JP-A-2012-82313, agglomerates and decomposition products derived from surfactants occur, causing defects and optical unevenness. In the method described in WO-A-2019/189684, the number of dark defects inside the film is suppressed insufficiently.

Therefore, although transparency is improved to some extent by the above conventional technologies, there is a need for further improving the transparency as the performance of polyvinyl alcohol resins themselves as a base resin in the context of higher demand in recent years.

Against this background, the present disclosure provides a polyvinyl alcohol resin film, an optical film, a water-soluble film, and a polyvinyl alcohol resin composition that can achieve, even with a smaller amount of additives used, the effect of further reducing internal haze caused by additives as well as the effect of further reducing external haze by controlling irregularities near the film surface by improving releasability and the like.

MEANS FOR SOLVING THE PROBLEMS

In view of such circumstances, the inventors of the present disclosure have conducted elaborate studies and found that a film obtained by forming a film by casting a composition containing a polyvinyl alcohol resin containing radiocarbon C14 has excellent transparency by setting a total haze value to 1.9 or less.

More specifically, the present disclosure has the following aspects.

[1] A polyvinyl alcohol resin film containing a polyvinyl alcohol resin (A), wherein the polyvinyl alcohol resin (A) contains radiocarbon C14, and the polyvinyl alcohol resin film has a total haze of 1.9 or less.

[2] The polyvinyl alcohol resin film according to [1], wherein the polyvinyl alcohol resin (A) has a saponification degree of 80 to 99.9 mol%.

[3] The polyvinyl alcohol resin film according to [1] or [2], wherein the polyvinyl alcohol resin (A) has a weight average molecular weight of 20000 to 150000.

[4] The polyvinyl alcohol resin film according to any one of [1] to [3], further containing a plasticizer (B).

[5] The polyvinyl alcohol resin film according to [4], wherein the plasticizer (B) is contained in an amount of 1 to 45 parts by mass per 100 parts by mass of the polyvinyl alcohol resin (A).

[6] The polyvinyl alcohol resin film according to any one of [1] to [5], wherein the polyvinyl alcohol resin film has a thickness of 10 to 130 $\mu$m.

[7] The polyvinyl alcohol resin film according to any one of [1] to [6], wherein the polyvinyl alcohol resin film is configured for polarizing film manufacturing applications.

[8] An optical film made of the polyvinyl alcohol resin film according to any one of [1] to [7].

[9] The optical film according to [8], wherein the optical film is a polarizing film.

[10] A water-soluble film made of the polyvinyl alcohol resin film according to any one of [1] to [6].

[11] A polyvinyl alcohol resin composition containing a polyvinyl alcohol resin (A), wherein the polyvinyl alcohol resin (A) contains radiocarbon C14, and wherein a film obtained by forming a film by casting the polyvinyl alcohol resin composition has a total haze value of 1.9 or less.

[12] The polyvinyl alcohol resin composition according to [11], further containing a plasticizer (B).

[13] A polyvinyl alcohol resin film including the polyvinyl alcohol resin composition according to [11] or [12].

EFFECTS OF THE DISCLOSURE

The polyvinyl alcohol resin film according to the present disclosure has excellent transparency. Furthermore, the amount of surfactant used for improving transparency can be reduced, thereby suppressing surfactant agglomeration, surfactant-derived decomposition products, and film defects and the like caused by surfactant agglomeration and decomposition products during film formation. Furthermore, because of excellent releasability during film formation, irregularities of the film surface can be alleviated. This can suppress light scattering on the surface and foggy appearance of the film.

EMBODIMENTS OF THE DISCLOSURE

The present disclosure will be described in detail below. It should be noted that the present disclosure is not limited to the following embodiments.

In the present description, "x and/or y (x and y are each a given configuration)" is intended to mean at least one of x and y and mean the following three meanings: only x; only y; and x and y.

In the present description, the expression "X to Y" (X and Y are each a given number) is intended to encompass "preferably more than X" or "preferably less than Y" unless otherwise specified, in addition to the meaning of "X or more and Y or less".

In the present description, the expression "X or more" (X is a given number) or "Y or less" (Y is a given number) is intended to encompass "preferably greater than X" or "preferably less than Y".

For numerical ranges described in steps in the present description, the upper or lower limit of the numerical range for one step can be arbitrarily combined with the upper or lower limit of the numerical range for another step. The upper or lower limit of the numerical range described in the present description may be replaced by any values shown in the examples.

In the present description, "film" is meant to include "tape" and "sheet".

In the present description, "main component" means a component that significantly affects the properties of a target and the content of the component is usually 50% by mass or more in the target, preferably 55% by mass or more, more preferably 60% by mass or more, even more preferably 70% by mass or more, and may be 100% by mass.

A polyvinyl alcohol resin film according to an embodiment of the present disclosure (which hereinafter may be referred to as "the present polyvinyl alcohol resin film") contains a polyvinyl alcohol resin containing radiocarbon C14, and the polyvinyl alcohol resin film has a total haze of 1.9 or less.

It is necessary that the total haze of the present polyvinyl alcohol resin film is 1.9 or less, preferably 1.8 or less, particularly preferably 1.7 or less, and even more preferably 1.65 or less. The smaller the lower limit of the total haze, the more preferable. Thus, the lower limit is preferably 0 or more.

By setting the upper limit of total haze to the above value, a polyvinyl alcohol resin film with excellent transparency can be obtained.

The present polyvinyl alcohol resin film contains at least a polyvinyl alcohol resin (A), preferably contains a plasticizer (B) as other components, and optionally contains a surfactant (C), a starch (D), a water-soluble polymer (E) other than (A), and the like, if necessary.

<Polyvinyl Alcohol Resin (A)>

The polyvinyl alcohol resin (A) to be used in the present embodiment will be described.

It is necessary that the present polyvinyl alcohol resin film should contain at least one type of "polyvinyl alcohol resin (A1) in which all or part of carbon constituting the polyvinyl alcohol resin is derived from biologically derived ethylene".

In other words, as the polyvinyl alcohol resin (A) to be used, "polyvinyl alcohol resin (A1) in which all or part of carbon constituting the polyvinyl alcohol resin is derived from biologically derived ethylene" may be used alone, or a mixture of "polyvinyl alcohol resin (A1) in which all or part of carbon constituting the polyvinyl alcohol resin is derived from biologically derived ethylene" and "polyvinyl alcohol resin (A'1) derived only from fossil fuel-derived raw material" may be used.

Such "polyvinyl alcohol resin (A1) in which all or part of carbon constituting the polyvinyl alcohol resin is derived from biologically derived ethylene" can be obtained by any method, and examples of the method include:

(1) saponifying only a polyvinyl ester obtained by polymerizing only a bio-vinyl ester monomer from bio-ethylene as a raw material,

(2) saponifying a polyvinyl ester obtained by polymerizing a bio-vinyl ester monomer from a mixture of bio-ethylene and fossil fuel-derived ethylene as a raw material,

(3) saponifying a polyvinyl ester obtained by copolymerizing a bio-vinyl ester monomer from bio-ethylene as a raw material and a vinyl ester monomer from fossil fuel-derived ethylene as a raw material,

(4) saponifying a mixture of a polyvinyl ester obtained by polymerizing only a bio-vinyl ester monomer from bio-ethylene as a raw material and a polyvinyl ester obtained by polymerizing only a fossil fuel-derived vinyl ester monomer, and

(5) a combination of the above methods (2) to (4).

Among these methods, the method (1) or (2) is preferred in that it can efficiently produce the polyvinyl alcohol resin (A1) in which all or part of carbon constituting the polyvinyl alcohol resin is derived from biologically derived ethylene.

Examples of the vinyl ester monomer include vinyl formate, vinyl acetate, vinyl propionate, vinyl valerate, vinyl laurate, vinyl stearate, vinyl benzoate, vinyl pivalate, and vinyl versatate. Among these, vinyl acetate is preferred.

The vinyl ester monomer can be produced by any method, for example, can be obtained by reacting ethylene with a compound having a carboxy group represented by R-COOH. Vinyl acetate can be synthesized as follows. Vinyl acetate can be usually obtained by gas-phase reaction of ethylene, acetic acid, and oxygen in the presence of a catalyst. At this time, ethylene containing a predetermined amount of C14 or acetic acid containing a predetermined amount of C14 as the compound having a carboxy group is used to obtain vinyl acetate containing a predetermined amount of C14. The ethylene containing a predetermined amount of C14 is, for example, bio-ethylene.

In production of the vinyl ester monomer, raw materials other than ethylene, such as a carboxylic acid, are preferably biologically derived materials. However, since the carboxylic acid group is removed from the polymer main chain of the polyvinyl ester during saponification and usually recovered and reused, the use of fossil fuel-derived materials does not increase the amount of carbon dioxide in the global environment and does not contribute to global warming.

The polyvinyl ester is preferably obtained using one or two or more vinyl ester monomers and more preferably obtained using only one vinyl ester monomer.

The polyvinyl ester may be a copolymer of one or two or more vinyl ester monomers and other monomer that can be copolymerized with the vinyl ester monomer.

Ethylene is preferred as the other monomer that can be copolymerized with the vinyl ester monomer. In other words, the polyvinyl alcohol contained in the polyvinyl alcohol resin film according to the present disclosure preferably contains an ethylene unit. The content of the ethylene unit is preferably 1 mol% or more, and more preferably 1.5 mol% or more, based on the moles of all structural units that constitute the vinyl ester polymer. The content of the ethylene unit is preferably less than 15 mol%, and more preferably less than 10 mol%, based on the moles of all structural units that constitute the vinyl ester polymer. The content of the ethylene unit in the above range can improve water resistance and the like without significantly impairing the optical properties of the polyvinyl alcohol resin film when the polyvinyl alcohol resin film according to the present disclosure is used as a base film for producing optical films. The reason for this is not necessarily clear, but presumably, the introduction of ethylene units into the polymer main chain weakens hydrophilicity, but does not significantly disrupt the crystal structure of polyvinyl alcohol because the volume of ethylene units in the crystal is not significantly different from the volume of vinyl alcohol units.

Examples of the other monomer that can be copolymerized with the vinyl ester monomer include, in addition to ethylene, olefins having 3 to 30 carbon atoms, such as propylene, 1-butene, and isobutene; acrylic acid or its salts; acrylate esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid or its salts; methacrylate esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide, acrylamide derivatives such as N-methylacrylamide, N-ethylacrylamide, N,N-dimethylacrylamide, diacetone acrylamide, acrylamide propanesulfonic acid or its salts, acrylamidopropyldimethylamine or its salts, and N-methylol acrylamide or its derivatives; methacrylamide, methacrylamide derivatives such as N-methylmethacrylamide, N-ethylmethacrylamide, methacrylamide propanesulfonic acid or its salts, methacrylamidopropyldimethylamine or its salts, and N-methylol methacrylamide or its derivatives; N-vinylamides such as N-vinylformamide, N-vinylacetamide, and N-vinylpyrrolidone; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides such as acrylonitrile and methacrylonitrile; vinyl halides such as vinyl chloride, vinylidene chloride, vinyl fluoride, and vinylidene fluoride; allyl compounds such as allyl acetate and allyl chloride; maleic acid, or its salts, esters or acid anhydrides; itaconic acid or its salts, esters or acid anhydrides; vinyl silyl compounds such as vinyltrimethoxysilane; and isopropenyl acetate. The vinyl ester polymer can have structural units derived from one or two or more of these other monomers.

The ratio of structural units derived from the other monomers in the polyvinyl ester is preferably 15 mol% or less, more preferably 5 mol% or less, based on the moles of structural units that constitute the polyvinyl ester, in view of strength of the resulting polyvinyl alcohol resin film and optical performance when the polyvinyl alcohol resin film is used as a base film for producing optical films.

The other monomer that can be copolymerized with the vinyl ester monomer can be a fossil fuel-derived monomer or a plant-derived monomer.

The polyvinyl alcohol resin (A) preferably has a weight average molecular weight of 20000 to 150000, particularly preferably 60000 to 130000, and even more preferably 70000 to 120000. If the weight average molecular weight is too small, mechanical strength tends to decrease. On the other hand, if too large, productivity tends to decrease. Further, if the weight average molecular weight is too small, it tends to be difficult to obtain sufficient optical performance when the polyvinyl alcohol resin is made into an optical film, and if the weight average molecular weight is too large, it tends to be difficult to stretch the polyvinyl alcohol resin film when producing a polarizing film. The weight average molecular weight of the polyvinyl alcohol resin is the weight average molecular weight measured by a GPC method.

The polyvinyl alcohol resin (A) preferably has a dispersity (weight average molecular weight/number average molecular weight) of 1.95 to 3.50, particularly preferably 1.96 to 2.50, and even more preferably 1.97 to 2.10.

If the dispersity is too small, it tends to be difficult to stretch the polyvinyl alcohol resin film when producing a polarizing film, and if the dispersity is too large, it tends to be difficult to obtain sufficient optical performance when the polyvinyl alcohol resin is made into an optical film.

The weight average molecular weight and the number average molecular weight for determining the dispersity of the polyvinyl alcohol resin are the weight average molecular weight and the number average molecular weight measured by a GPC method.

In general, the polyvinyl alcohol resin (A) preferably has an average saponification degree of 80 mol% or more, more preferably 87 mol% or more, particularly preferably 99 mol% or more, even more preferably 99.5 mol% or more, and especially preferably 99.8 mol% or more. If the average saponification degree is too small, sufficient optical performance tends not to be obtained when the polyvinyl alcohol resin film is made as a polarizing film.

In the present description, the average saponification degree is measured in accordance with JIS K 6726.

It is important that the polyvinyl alcohol resin (A) contains radiocarbon C14.

In the present description, "containing radiocarbon C14" means that the biomass content measured in accordance with ASTM D6866 Method B as specified by American Society of Testing and Materials is greater than 0%.

The biomass content calculated from a measured value of radiocarbon C14 is preferably 5% or more, more preferably 45% or more, even more preferably 50% or more, and particularly preferably 55% or more. The biomass content is preferably less than 100%, more preferably 95% or less, even more preferably 90% or less, and particularly preferably 83% or less.

By setting the biomass content calculated from a measured value of radiocarbon C14 to the above range, the polyvinyl alcohol resin used as a base resin has excellent transparency, and the amount of surfactant that affects reduced transparency can be reduced, thereby suppressing surfactant agglomeration, surfactant-derived decomposition products, and film defects and the like caused by surfactant agglomeration and decomposition products during film formation. Furthermore, because of excellent releasability during film formation, irregularities of the film surface can be alleviated. This can suppress light scattering on the surface and foggy appearance of the film.

As the polyvinyl alcohol resin (A), one type of polyvinyl alcohol may be used, or a blend of two or more types of polyvinyl alcohols with different degrees of polymerization, saponification, or modification may be used.

<Plasticizer (B)>

Examples of the plasticizer (B) include glycerols such as glycerin, diglycerin, and triglycerin, alkylene glycols such as triethylene glycol, polyethylene glycol, polypropylene glycol, dipropylene glycol, and propylene glycol, trimethylolpropane, and sugar alcohols such as sorbitol, xylitol, and maltitol. These can be used alone or in combination of two or more. Among these, glycerin, polyethylene glycol, and diglycerin are preferred because they are readily available and plasticizing effects can be obtained with small amounts.

The content of the plasticizer (B) is preferably 1 to 45 parts by mass, particularly preferably 3 to 30 parts by mass, and even more preferably 5 to 25 parts by mass, per 100 parts by mass of the polyvinyl alcohol resin (A). If the content of the plasticizer (B) is too small, stretchability during production of a polarizing film tends to decrease, and if the content of the plasticizer (B) is too large, the strength of the resulting polyvinyl alcohol resin film tends to decrease.

<Surfactant (C)>

The surfactant (C) generally plays a role for smoothness of the film surface and suppressing adhesion between films when the film is rolled. For example, a nonionic surfactant, an anionic surfactant, or a cationic surfactant can be used alone or two or more types may be used in combination.

Examples of the nonionic surfactant include polyoxyethylene alkyl ethers such as polyoxyethylene hexyl ether, polyoxyethylene heptyl ether, polyoxyethylene octyl ether, polyoxyethylene nonyl ether, polyoxyethylene decyl ether, polyoxyethylene dodecyl ether, polyoxyethylene tetradecyl ether, polyoxyethylene hexadecyl ether, polyoxyethylene octadecyl ether, polyoxyethylene eicosyl ether, polyoxyethylene oleyl ether, polyoxyethylene lauryl ether, palm oil reduced alcohol ethylene oxide adduct, and beef tallow reduced alcohol ethylene oxide adduct, higher fatty acid alkanolamides such as caproic acid mono or diethanolamide, caprylic acid mono or diethanolamide, capric acid mono or diethanolamide, lauric acid mono or diethanolamide, palmitic acid mono or diethanolamide, stearic acid mono or diethanolamide, oleic acid mono or diethanolamide, palm oil fatty acid mono or diethanolamide, or propanolamides and butanolamides instead of these ethanolamides, higher fatty acid amides such as caproic acid amide, caprylic acid amide, capric acid amide, lauric acid amide, palmitic acid amide, stearic acid amide, and oleic acid amide, hydroxyethyl laurylamine, polyoxyethylene alkyl amines such as polyoxyethylene hexylamine, polyoxyethylene heptylamine, polyoxyethylene octylamine, polyoxyethylene nonylamine, polyoxyethylene decylamine, polyoxyethylene dodecylamine, polyoxyethylene tetradecylamine, polyoxyethylene hexadecylamine, polyoxyethylene octadecylamine, polyoxyethylene oleylamine, polyoxyethylene laurylamine, and polyoxyethylene eicosylamine, polyoxyethylene higher fatty acid amides such as polyoxyethylene caproic acid amide, polyoxyethylene caprylic acid amide, polyoxyethylne capric acid amide, polyoxyethylene lauric acid amide, polyoxyethylene palmitic acid amide, polyoxyethylene stearic acid amide, and polyoxyethylene oleic acid amide, amine oxides such as dimethyl lauryl amine oxide, dimethyl stearyl amine oxide, and dihydroxyethyl lauryl amine oxide, and fluoroalkyl acids such as perfluorooctanoic acid.

Examples of the anionic surfactant include sulfate ester salt type including alkyl sulfate ester salts such as sodium hexyl sulfate, sodium heptyl sulfate, sodium octyl sulfate, sodium nonyl sulfate, sodium decyl sulfate, sodium dodecyl sulfate, sodium tetradecyl sulfate, sodium hexadecyl sulfate, sodium octadecyl sulfate, sodium eicosyl sulfate, or potassium, calcium, and ammonium salts thereof; polyoxyethylene alkyl ether sulfate salts such as sodium polyoxyethylene hexyl ether sulfate, sodium polyoxyethylene heptyl ether sulfate, sodium polyoxyethylene octyl ether sulfate, sodium polyoxyethylene nonyl ether sulfate, sodium polyoxyethylene decyl ether sulfate, sodium polyoxyethylene dodecyl ether sulfate, sodium polyoxyethylene tetradecyl ether sulfate, sodium polyoxyethylene hexadecyl ether sulfate, sodium polyoxyethylene octadecyl ether sulfate, sodium polyoxyethylene eicosyl ether sulfate, or potassium and ammonium salts thereof; polyoxyethylene alkylphenyl ether sulfate salts such as sodium polyoxyethylene hexylphenyl ether sulfate, sodium polyoxyethylene heptylphenyl ether sulfate, sodium polyoxyethylene octylphenyl ether sulfate, sodium polyoxyethylene nonylphenyl ether sulfate, sodium polyoxyethylene decylphenyl ether sulfate, sodium polyoxyethylene dodecylphenyl ether sulfate, sodium polyoxyethylene tetradecylphenyl ether sulfate, sodium polyoxyethylene hexadecylphenyl ether sulfate, sodium polyoxyethylene octadecylphenyl ether sulfate, sodium polyoxyethylene eicosylphenyl ether sulfate, or potassium and ammonium salts thereof; higher fatty acid alkanolamide sulfate ester salts such as sodium caproic acid ethanolamide sulfate, sodium caprylic acid ethanolamide sulfate, sodium capric acid ethanolamide sulfate, sodium lauric acid ethanolamide sulfate, sodium palmitic acid ethanolamide sulfate, sodium stearic acid ethanolamide sulfate, sodium oleic acid ethanolamide sulfate, or potassium salts thereof, and propanolamides and butanolamides instead of these ethanolamides; sulfonated oils, higher alcohol ethoxysulfates, and monoglysulfates. Examples other than the above sulfate ester salt type include carboxylate salt type such as fatty acid soap, N-acylamino acid and its salts, polyoxyethylene alkyl ester carboxylate salt, and acylated peptide; sulfonate salt type such as alkyl sulfonate salt, alkyl benzene sulfonate salt, alkyl naphthalene sulfonate salt, naphthalene sulfonate salt formalin polycondensate, melamine sulfonate salt formalin condensate, dialkyl sulfosuccinate salt, alkyl sulfosuccinate disalt, polyoxyethylene alkyl sulfosuccinate disalt, alkyl sulfoacetate salt, $\alpha$-olefin sulfonate salt, N-acylmethyl taurine salt, sodium salt of dimethyl-5-sulfoisophthalate; and phosphate ester salt type such as polyoxyethylene alkyl ether phosphate salt, polyoxyethylene alkyl phenyl ether phosphate salt, and alkyl phosphate salt.

Examples of the cationic surfactant include laurylamine hydrochloride salt, lauryl trimethyl ammonium chloride, and lauryl pyridinium chloride.

Among these, the nonionic surfactants are preferred. Higher fatty acid alkanolamides are particularly preferred. Lauric acid mono or diethanolamide, palmitic acid mono or diethanolamide, stearic acid mono or diethanolamide, and oleic acid mono or diethanolamide are even more preferred. Lauric acid mono or diethanolamide is especially preferred. Lauric acid diethanolamide is more preferred.

The surfactants (C) may be used alone or in combination of two or more. A combination of an anionic surfactant and a nonionic surfactant is preferred in terms of film transparency.

The content of the surfactant (C) is preferably 0.01 to 1 parts by mass, particularly preferably 0.02 to 0.5 parts by mass, even more preferably 0.03 to 0.2 parts by mass, per 100 parts by mass of the polyvinyl alcohol resin (A). If the content of the surfactant (C) is too low, it tends to be difficult to obtain the blocking preventing effect. If the content of the surfactant (C) is too high, the transparency of the film tends to decrease.

When an anionic surfactant and a nonionic surfactant are used in combination, it is preferable that the anionic surfactant is in an amount of 0.01 to 1 parts by mass, particularly 0.02 to 0.2 parts by mass, and even more preferably 0.03 to 0.1 parts by mass, per 100 parts by mass of the polyvinyl alcohol resin (A), and the nonionic surfactant is preferably in an amount of 0.01 to 1 parts by mass, particularly 0.02 to 0.2 parts by mass, and even more preferably 0.03 to 0.1 parts by mass. If the amount of the anionic surfactant is too small, the dispersibility of dye tends to decrease and uneven dyeing tends to increase during production of a polarizing film. If the amount of the anionic surfactant is too large, vigorous foaming tends to occur during dissolution of the polyvinyl alcohol resin, which tends to cause bubbles in the film, making the film unusable as an optical film. If the amount of the nonionic surfactant is too small, it is difficult to obtain the blocking preventing effect, and if the amount of the nonionic surfactant is too large, the transparency and surface smoothness of the film tends to decrease.

<Starch (D)>

Examples of the starch (D) include raw starches (corn starch, potato starch, sweet potato starch, wheat starch, cassava starch, sago starch, tapioca starch, sorghum starch, rice starch, pea starch, kudzu starch, bracken starch, lotus starch, water chestnut starch, etc.), physically modified starches ($\alpha$-starch, fractionated amylose, moist heat-treated starch, etc.), enzyme-modified starches (hydrolyzed dextrin, enzyme-decomposed dextrin, amylose, etc.), chemically degraded starches (acid-treated starch, hypochlorous acidoxidized starch, dialdehyde starch, etc.), and chemically modified starch derivatives (esterified starch, etherified starch, cationized starch, crosslinked starch, etc.). Among these, the raw starches, particularly the corn starch and the rice starch, are preferably used in terms of easy availability and cost efficiency. These can be used alone or in combination of two or more.

The content of the starch (D) is preferably 15 parts or less and more preferably 10 parts or less, per 100 parts by mass of the polyvinyl alcohol resin (A). If the amount of the starch (D) is greater than 15 parts by mass, process passability during production of the polyvinyl alcohol resin film may deteriorate.

<Water-Soluble Polymer (E) Other Than (A)>

Examples of the water-soluble polymer (E) other than the polyvinyl alcohol resin (A) include dextrin, gelatin, glue, casein, shellac, gum arabic, polyacrylate amide, sodium polyacrylate, polyvinyl methyl ether, copolymer of methyl vinyl ether and maleic anhydride, copolymer of vinyl acetate and itaconic acid, polyvinyl pyrrolidone, cellulose, acetyl cellulose, acetyl butyl cellulose, carboxymethyl cellulose, methyl cellulose, ethyl cellulose, hydroxyethyl cellulose, and sodium alginate. These can be used alone or in combination of two or more.

The content of the water-soluble polymer (E) is preferably 15 parts by mass or less and more preferably 10 parts by mass or less, per 100 parts by mass of the polyvinyl alcohol resin (A). If the content of the water-soluble polymer (E) is greater than 15 parts by mass, the physical properties of the polyvinyl alcohol resin film may be impaired.

<Other Components>

The present polyvinyl alcohol resin film may contain components other than the plasticizer, the surfactant, the starch, and the water-soluble polymer other than the polyvinyl alcohol resin (A), such as water, antioxidant, UV absorber, lubricant, crosslinking agent, colorant, filler, preservative, fungicide, and other polymer compounds, to the extent that the effects of the present disclosure are not impaired. These can be used alone or in combination of two or more.

The polyvinyl alcohol resin film is preferably a film obtained using a polyvinyl alcohol resin composition.

<Method for Producing Polyvinyl Alcohol Resin Film>

The present polyvinyl alcohol resin film is produced by using a film-forming raw solution (aqueous solution of the polyvinyl alcohol resin composition) made by adding a solvent, additives, and the like to the polyvinyl alcohol resin (A) to make a homogeneous solution, and forming a film by a cast film-forming method, a wet film-forming method (discharge into a poor solvent), a dry and wet film-forming method, a gel film-forming method (a method in which the film-forming raw solution is cooled to form a gel, and then the solvent is extracted and removed to obtain a polyvinyl alcohol resin film), or a combination of these methods. Alternatively, the film can be formed by any other method such as a melt-extrusion film-forming method or an inflation molding method that uses an extruder or the like to extrude the prepared film-forming raw solution from a T-die or the like. Among these, the cast film-forming method and the melt-extrusion film-forming method are preferred because these methods can produce a uniform film with high productivity. The cast film-forming method or the melt-extrusion film-forming method for a polyvinyl alcohol resin film will now be described.

When a polyvinyl alcohol resin film is formed by the cast film-forming method or the melt-extrusion film-forming method, the film-forming raw solution is subjected to a defoaming process and casted on a support such as a metal roll or a metal belt in the form of a film, then heated to remove the solvent, and solidified into a film. Defoaming methods include static defoaming and defoaming using a multi-screw extruder with a vent. A twin-screw extruder with a vent is usually used as the multi-screw extruder with a vent. The solidified film is peeled from the support, dried by a drying roll, a drying furnace, or the like if necessary, further subjected to heat treatment if necessary, and rolled to obtain an elongated polyvinyl alcohol resin film in the form of a roll.

The resin concentration (the concentration of nonvolatile component, such as polyvinyl alcohol resin, that is not removed by volatilization or evaporation during film forming) of the film-forming raw solution is preferably 10 to 60% by mass, particularly preferably 12 to 55% by mass, and even more preferably 20 to 50% by mass. If the resin concentration of the aqueous solution is too low, the drying load increases, which tends to reduce production capacity. If the resin concentration is too high, the viscosity is too high, which tends to make homogeneous dissolution difficult.

In the present description, the "resin concentration of the film-forming raw solution" refers to the volatile fraction obtained by the following formula.

Resin concentration of the film-forming raw solution (% by mass) = $(W_b/W_a) \times 100$

(In the formula, $W_a$ represents the mass (g) of the film-forming raw solution, and $W_b$ represents the mass (g) when the film-forming raw solution of $W_a$ (g) is dried in an electric heating dryer at 105°C for 16 hours.)

The film-forming raw solution can be prepared by any method. Examples of the method include a method in which the polyvinyl alcohol resin (A) and additives such as the plasticizer (B) and the surfactant (C) are dissolved in a dissolution tank or the like; and a method in which the plasticizer (B), the surfactant (C), and the like are melt-blended together during melt-blending of the polyvinyl alcohol resin (A) in a moisture state using a single-screw extruder or a twin-screw extruder.

When a polyvinyl alcohol resin film is formed by the cast film-forming method or the melt-extrusion film-forming method, the film-forming raw solution is casted from a film ejection device onto a support such as a metal roll or a metal belt in the form of a film, then heated to remove the solvent, and solidified into a film.

The surface temperature of the support on which the film-forming raw solution is casted is preferably 50°C or higher, more preferably 60°C or higher, and even more preferably 65°C or higher. The surface temperature of the support on which the film-forming raw solution is casted is preferably 110°C or lower, more preferably 100°C or lower, and even more preferably 95°C or lower. If the surface temperature is too low, the releasability tends to decrease when the film obtained by film forming is peeled from a casting mold. If the surface temperature is too high, foaming tends to occur.

Simultaneously with heating of the polyvinyl alcohol resin film on the support, the drying speed may be adjusted by uniformly blowing hot air with an air velocity of 1 to 10 m/s over the entire area of the non-contact side of the polyvinyl alcohol resin film. The temperature of hot air blown to the non-contact side is preferably 50°C or higher and more preferably 70°C or higher in terms of drying efficiency and drying uniformity. The temperature of hot air blown to the non-contact side is preferably 150°C or lower and more preferably 120°C or lower in terms of drying efficiency and drying uniformity.

The polyvinyl alcohol resin film peeled from the support is dried on the support, preferably to a volatile fraction of 5 to 50% by mass, and then peeled and further dried if necessary. The drying method is not limited and examples includes a drying oven or contact with a drying roll.

When the film is dried with a plurality of drying rolls, it is preferable that one side and the other side of the film are alternately brought into contact with the drying rolls in order to ensure uniformity on both sides. The number of drying rolls is preferably three or more, more preferably four or more, and even more preferably five or more. The number of drying rolls is preferably 30 or less. When drying rolls are used, the contact time between each drying roll and the film is preferably 1 to 60 seconds, particularly preferably 2 to 30 seconds, even more preferably 3 to 20 seconds, and especially preferably 4 to 10 seconds. If the contact time is too short, drying tends to be insufficient, and if the contact time is too long, the facility load tends to increase.

In the present embodiment, the temperature of all the furnace and drying rolls used is preferably 40 to 150°C, particularly preferably 50 to 140°C, even more preferably 60 to 130°C, and especially preferably 70 to 120°C.

If the temperature of the drying furnace and drying rolls is too low, drying tends to be insufficient. If the temperature of the drying furnace and drying rolls is too high, crystallization of the polyvinyl alcohol resin progresses and the film tends to become too hard.

The dried polyvinyl alcohol resin film can be further subjected to heat treatment if necessary to adjust the physical properties such as strength and water solubility. The heat treatment in the present disclosure is preferably performed from both sides of the film in order to ensure a uniform dry state on both sides of the film. Examples of the heat treatment method include a method that blows hot air to both sides of the film using a floating dryer; and a method that irradiates both sides of the film with near-infrared rays using infrared lamps.

The heat treatment temperature is preferably 50 to 150°C and particularly preferably 70 to 120°C. The heat treatment time is not particularly limited but when a floating drying is used, the heat treatment time is preferably 10 to 100 seconds and particularly preferably 20 to 80 seconds.

The polyvinyl alcohol resin film produced in this way is further subjected to moisture control and cut off at both ends of the film, if necessary, and rolled onto a cylindrical core and made into a moisture-proof package as a product.

The volatile fraction of the polyvinyl alcohol resin film finally obtained through the series of processes described above is not necessarily limited. The volatile fraction of the polyvinyl alcohol resin film is preferably 1% by mass or more and more preferably 2% by mass or more. The volatile fraction of the polyvinyl alcohol resin film is preferably 10% by mass or less and more preferably 5% by mass or less.

The length of the present polyvinyl alcohol resin film thus obtained is preferably 0.5 km or more in terms of manufacturing efficiency, more preferably 1 km or more, and particularly preferably 5 to 50 km in terms of transport weight. If the length is too small, film switching tends to require time and effort. If the length is too large, tight winding tends to result in poor appearance and heavy weight.

The width of the present polyvinyl alcohol resin film is selected as appropriate according to applications and the like, preferably 300 to 8000 mm, particularly preferably 500 to 7000 mm, and even more preferably 600 to 6000 mm. If the width is too small, the production efficiency tends to decrease. If the width is too large, controlling slackness and film thickness tends to be difficult.

The thickness of the present polyvinyl alcohol resin film is selected as appropriate according to applications and the like, preferably 10 to 130 $\mu$m, particularly preferably 15 to 110 $\mu$m, and even more preferably 15 to 60 $\mu$m. If the thickness is too small, the mechanical strength of the film tends to decrease, and if the thickness is too large, film forming efficiency tends to decrease.

It is preferable that the present polyvinyl alcohol resin film has a peeling strength of 4.49 N/m or less when the following peeling test is performed under an atmosphere of 23°C and 40% RH. The peeling strength is more preferably 4.45 N/m or less, even more preferably 4.38 N/m, particularly preferably 4.30 N/m or less. The lower limit of the peeling strength is not particularly defined, but the closer to zero the value, the more preferable. In terms of transport stability, 0.10 N/m or more is more preferred, and 0.15 N/m or more is even more preferred.

By setting the peeling strength to the above range, the film can be easily peeled from a cast film-forming mold during film formation, the irregularities of the film surface can be reduced, and light scattering on the surface and foggy appearance of the film can be suppressed. Thus, an external haze value can be further reduced and a total haze value can be reduced.

<Peeling Test>

An aqueous solution of the polyvinyl alcohol resin composition is applied to a chrome-plated stainless steel plate on a hot plate heated to 90°C using an applicator (width 150 mm) so that a film thickness after drying is 45 $\mu$m with a length

of 200 mm, allowed to stand at 90°C for 2.5 minutes on the hot plate, and adjusted by cutting off 10 mm at a coating end. The stainless steel plate coated with the polyvinyl alcohol resin composition is then placed on a stationary table of an autograph (AG-IS, Shimadzu Corporation). The strength (N) when the film is peeled 180° from a coating end surface in the longitudinal direction at a rate of 300 mm/min is measured using a precision universal testing machine (AG-IS, Shimadzu Corporation). Among the measured strengths, an average value of strengths in a 100 mm section at a central part in the longitudinal direction, excluding a section 50 mm from start of peeling and a section 50 mm before end of peeling, is converted to a strength per meter in width, and the converted strength is defined as a peeling strength (N/m).

In the present polyvinyl alcohol resin film, it is preferable that the difference between breaking strength and yield strength when the following tensile test is performed under an atmosphere of 23°C and 50%RH is preferably 4 N/mm$^2$ or more, more preferably 5 N/mm$^2$ or more, even more preferably 6 N/mm$^2$ or more, and particularly preferably 7 N/mm$^2$ or more. The larger the upper limit of the difference between breaking strength and yield strength, the more preferable. In view of the strength limit of the polyvinyl alcohol resin film, 40 N/mm$^2$ or less is preferred, 30 N/mm$^2$ or less is more preferred, and 25 N/mm$^2$ or less is even more preferred.

By setting the difference between breaking strength and yield strength to the above range, the tension during stretching in a stretching process during polarizing film manufacture can be reduced and breakage can be suppressed. This leads to longer life of stretching facilities, lower breakage frequency, and the like, resulting in efficient production of polarizing films.

<Tensile Test>

The polyvinyl alcohol resin film is subjected to moisture control at 23°C and 50%RH for 24 hours or longer, and then cut into a peel of 15 mm wide × 120 mm long to obtain a specimen, where the coating direction is the longitudinal direction. Using a precision universal testing machine (AG-IS, Shimadzu Corporation), a tensile test is performed in accordance with JIS K 7127, with a distance of 50 mm between chucks and a tensile test speed of 1000 mm/min. The yield strength (N/mm$^2$) and the breaking strength (N/mm$^2$) are measured, where the film thickness at a central part of the specimen is considered as the thickness of the specimen. The average values in the tensile test performed three times are considered as the yield strength and the breaking strength of the polyvinyl alcohol resin film, and the difference between the yield strength and the breaking strength of the polyvinyl alcohol resin film is determined.

In the application in which the present polyvinyl alcohol resin film is stretched during polarizing film manufacture or the like, the polyvinyl alcohol resin used in the polyvinyl alcohol resin film preferably has a biomass content of 3% or more as calculated from a measured value of radiocarbon C14, more preferably 5% or more, even more preferably 8% or more, and particularly preferably 9% or more. The biomass content is preferably less than 50%, more preferably 45% or less, even more preferably 40% or less, and particularly preferably 35% or less.

By setting the biomass content calculated from a measured value of radiocarbon C14 to the above range, the polyvinyl alcohol resin used as a base resin has excellent transparency. In addition, in the application in which stretching is performed during polarizing film manufacture or the like, breakage of the polyvinyl alcohol resin film can be further suppressed.

The present polyvinyl alcohol resin film thus obtained is characterized by high transparency and excellent antistatic performance and therefore is useful for polarizing film applications that require high optical properties (liquid crystal TVs, smartphones, tablets, personal computers, projectors, vehicle-mounted panels, etc.), and water-soluble film applications (unit packaging applications for chemical agents such as agricultural agents and detergents, (water pressure) transfer films, sanitary supplies such as napkins and disposal diapers, waste disposal supplies such as ostomy bags, medical supplies such as blood-absorbing sheets, and temporary base materials for seeding sheets, seed tapes, and embroidery bases).

A method for producing a polarizing film which is an embodiment of the present disclosure (which hereinafter may be referred to as "the present polarizing film") will now be described.

The present polarizing film is produced by rolling out the polyvinyl alcohol resin film from a roll and transferring the film horizontally, followed by processes such as swelling, dyeing, crosslinking, stretching, washing, and drying.

The swelling process is performed before the dyeing process. The swelling process can clean contamination on the surface of the polyvinyl alcohol resin film and, in addition, swelling the polyvinyl alcohol resin film is effective in preventing uneven dyeing or the like. In the swelling process, water is usually used as a process liquid. The process liquid may contain a small amount of additives such as iodinated compound and surfactant, alcohol, and the like as long as its main component is water. The temperature of a swelling bath is usually about 10 to 45°C, and the immersion time in the swelling bath is usually 0.1 to 10 minutes.

The dyeing process is performed by bringing the film into contact with a liquid containing iodine or a dichroic dye. Usually an aqueous solution of iodine-potassium iodide is used, in which the iodine concentration is usually 0.1 to 2 g/L and the potassium iodide concentration is usually 1 to 100 g/L. The dyeing time is usually about 30 to 500 seconds in practice. The temperature of a process bath is preferably 5 to 50°C. The aqueous solution may contain a small amount of an organic solvent compatible with water in addition to a water solvent.

The crosslinking process is performed using a boron compound such as boric acid and borax. The boron compound is usually used in the form of an aqueous solution or a water-organic solvent mixture at a concentration of about 10 to 100 g/L. The coexistence of potassium iodide in the solution is preferred in terms of stabilization of polarization performance.

The temperature during the process is usually about 30 to 70°C, and the process time is preferably about 0.1 to 20 minutes. Stretching may be performed during the process if necessary.

The stretching process is preferably at a ratio of 3 to 10, particularly preferably at a ratio of 3.5 to 6, in the uniaxial direction. In this case, the film may be stretched slightly in a direction perpendicular to the stretching direction (stretched to the extent that prevents shrinkage in the width direction, or more). The temperature during stretching is preferably 30 to 170°C. Further, as long as the stretch ratio is ultimately set to the above range, the stretching operation may be performed not only in one step, but in any range of steps in the manufacturing process.

The washing process is performed, for example, by immersing the polyvinyl alcohol resin film in water or an aqueous solution of iodide such as potassium iodide. The washing process can remove deposits produced on the film surface. When an aqueous solution of potassium iodide is used, the concentration of potassium iodide may be about 1 to 80 g/L. The temperature during washing process is usually 5 to 50°C, preferably 10 to 45°C. The process time is usually 1 to 300 seconds, preferably 10 to 240 seconds. The washing with water and the washing with an aqueous solution of potassium iodide solution may be combined as appropriate.

The drying process is usually performed at 40 to 80°C for 1 to 10 minutes in the air.

The degree of polarization of the polarizing film is preferably 99.8% or more and particularly preferably 99.9% or more. If the degree of polarization is too low, it tends to be impossible to ensure contrast of liquid crystal displays.

The degree of polarization is generally calculated according to the following formula from a light transmittance (H11) measured at wavelength $\lambda$ with two polarizing films superimposed such that their orientation directions are the same, and a light transmittance (H1) measured at wavelength $\lambda$ with two polarizing films superimposed such that their orientation directions are orthogonal to each other.

$$[(H11 - H1)/(H11 + H1)]^{1/2}$$

Further, the single transmittance of the present polarizing film is preferably 42% or more and particularly preferably 43% or more. If the single transmittance is too low, it tends to be impossible to achieve high luminance of liquid crystal displays.

The single transmittance is a value obtained by measuring the light transmittance of the polarizing film alone using a spectrophotometer.

The present polarizing film is thus obtained. The present polarizing film is suitable for producing a polarizer with less unevenness in the degree of polarization.

The obtained polarizing film can be laminated and bonded to an optically isotropic polymer film or sheet as a protective film on one side or both sides to be used as a polarizer. Examples of the protective film include films or sheets of cellulose triacetate, cellulose diacetate, polycarbonate, polymethyl methacrylate, crosslinked methacrylate resin, cycloolefin polymer, cycloolefin copolymer, polystyrene, polyethersulfone, polyarylene ester, poly-4-methylpentene, and polyphenylene oxide.

The polarizing film can also be laminated with a curable resin such as urethane resin, acrylic resin, and urea resin applied and cured on one side or both sides, instead of the protective film, in order to make the film thinner.

The polarizing film obtained from the present polyvinyl alcohol resin film is free from color unevenness and has excellent in-plane uniformity of polarizing performance, and can be preferably used in, for example, portable information terminals, personal computers, TVs, projectors, signage, electronic desktop computers, electronic clocks, word processors, electronic paper, game machines, videos, cameras, photo albums, thermometers, audio equipment, liquid crystal displays for meters and gauges for automobiles and machinery instruments, sunglasses, anti-glare glasses, 3D glasses, wearable displays, antireflection layers for display devices (CRT, LCD, organic EL, electronic paper, etc.), optical communication devices, medical devices, construction materials, toys, and the like.

EXAMPLES

The present disclosure will be described more specifically below with examples. However, it should be understood that the present disclosure is not limited to the following examples within the scope of the present disclosure.

In the examples, "parts" and "%" are based on mass.

<Measurement Conditions>

<GPC Measurement of Polyvinyl Alcohol Resin>

A chromatogram was obtained by gel permeation chromatography (GPC) under the following measurement conditions. The weight average molecular weight of the polyvinyl alcohol resin in terms of standard sample (PEO/PEG) equivalent was calculated using a calibration curve obtained by measuring standard polyethylene oxide and polyethylene glycol (PEO/PEG) and converting the elution time to a molecular weight.

[GPC Measurement Conditions]

Detector: RI, Shodex RI-501
Column: TSKgel $\alpha$-M 13 $\mu$m 7.8 mm I.D. $\times$ 30 cm from Tosoh Corporation
Mobile phase: 0.2M $NaNO_3$ solution
Mobile phase flow rate: 0.50 mL/min
Column temperature: 35°C
Calibration curve: calibration curve was prepared using 12 PEO/PEG standard samples with different molecular weights.

<Method for Measuring Total Haze>

A sample of 30 mm $\times$ 30 mm and 45 $\mu$m thick was taken from the obtained polyvinyl alcohol resin film and measured using a haze meter "NDH4000" (NIPPON DENSHOKU INDUSTRIES CO., LTD.) in accordance with JIS K 7136. The surface of the film was measured in a normal state without any treatment. The measured value is listed in Tables 1 and 2 below.

<Peeling Strength>

An aqueous solution of the obtained polyvinyl alcohol resin composition was applied to a chrome-plated stainless steel plate on a hot plate heated to 90°C using an applicator (width 150 mm) so that a film thickness after drying was 45 $\mu$m with a length of 200 mm, allowed to stand at 90°C for 2.5 minutes on the hot plate, and adjusted by cutting off 10 mm horizontally in the width direction at a coating end. The stainless steel plate coated with the polyvinyl alcohol resin composition was then placed on a stationary table of an autograph (AG-IS, Shimadzu Corporation). The strength (N) when the film was peeled 180° from a coating end surface in the longitudinal direction at a rate of 300 mm/min was measured using a precision universal testing machine (AG-IS, Shimadzu Corporation). Among the measured strengths, an average value of strengths in a 100 mm section at a central part in the longitudinal direction, excluding a section 50 mm from start of peeling and a section 50 mm before end of peeling, was converted to a strength per meter in width, and the converted strength was defined as a peeling strength (N/m). The entire operation was performed under an atmosphere of 23°C and 40% RH.

The average value of the peeling strength (N/m) measured five times is shown in Table 1 as the peeling strength of the polyvinyl alcohol resin film.

<Tensile Test>

The obtained polyvinyl alcohol resin film was subjected to moisture control at 23°C and 50%RH for 24 hours or longer, and then cut into a peel of 15 mm wide $\times$ 120 mm long to obtain a specimen, where the coating direction was the longitudinal direction. Using a precision universal testing machine (AG-IS, Shimadzu Corporation), a tensile test was performed in accordance with JIS K 7127, with a distance of 50 mm between chucks and a tensile test speed of 1000 mm/min. The yield strength ($N/mm^2$) and the breaking strength ($N/mm^2$) were measured, where the film thickness at a central part of the specimen was considered as the thickness of the specimen. The entire operation was performed under an atmosphere of 23°C and 50% RH.

The average values in the tensile test performed three times are considered as the yield strength and the breaking strength of the polyvinyl alcohol resin film, and the difference between the yield strength and the breaking strength of the polyvinyl alcohol resin film is listed in Table 2 below.

<Synthesis Example of Polyvinyl Alcohol Resin (A1) (Biologically Derived PVA Resin)>

To a reactor equipped with a reflux cooling tube, a sample inlet, and a stirring blade, 650 parts by mass of vinyl acetate in which carbon of the vinyl group is derived from biomass, and 131 parts by mass of methanol were added. The reactor was immersed in a water bath to raise the temperature. When reflux was observed from the cooling tube (internal temperature was about 60°C), 0.052 parts by mass of 2,2'-azobis(isobutyronitrile) was added as an initiator. During polymerization, the temperature of the water bath was adjusted as appropriate to maintain reflux from the cooling tube, and sampling was performed to check the progress of polymerization from the solid concentration. When the conversion ratio of vinyl acetate reached 55%, the polymerization was terminated by adding 0.013 parts by mass of m-dinitrobenzene and 500 parts by mass of methanol as polymerization terminators.

It took 6.75 hours from the addition of the initiator to reach the target conversion ratio.

Methanol and vinyl acetate were distilled off under reduced pressure from the resulting solution after polymerization. When the viscosity increased as appropriate, methanol was added to expel the remaining vinyl acetate to obtain a methanol solution of polyvinyl acetate.

The resulting methanol solution of polyvinyl acetate was diluted with methanol to a concentration of 4% by mass, and 2500 parts by mass of this polyvinyl acetate methanol solution (100 parts by mass as polyvinyl acetate) was charged in the same reactor as above. The reactor was immersed in a water bath and heated to an internal temperature of 65°C. A saponification reaction was initiated by adding 26.7 parts by mass of a methanol solution of 3.5% by mass sodium hydroxide. As the saponification reaction progressed, a saponification product precipitated, but stirring was continued. The saponification product obtained 1.5 hours after the addition of the methanol solution of sodium hydroxide was filtered off and charged to a reactor again, to which 700 parts by mass of methanol was added and heated to 65°C. To this, 20 parts by mass of a methanol solution of 3.5% by mass sodium hydroxide was added and allowed to react for 2.5 hours to drive the saponification reaction. Then, 1.3 parts by mass of acetic acid and 1200 parts by mass of methanol were added for neutralization, and the saponification product was obtained by suction filtration while washing with methanol. The resulting saponification product was washed with 1800 parts by mass of methanol at 65°C for 30 minutes and filtered off. The saponification product after washing was dried in a vacuum dryer at 50°C for 12 hours to obtain a polyvinyl alcohol resin (A1) (biologically derived PVA resin) (weight average molecular weight 81,000; biomass content 95%; saponification degree 99.8 mol%).

<Synthesis Example of Polyvinyl Alcohol Resin (A'1) (Petroleum-Derived PVA Resin)>

To a reactor equipped with a reflux cooling tube, a sample inlet, and a stirring blade, 650 parts by mass of petroleum-derived vinyl acetate and 131 parts by mass of methanol were added. The reactor was immersed in a water bath to raise the temperature. When reflux was observed from the cooling tube (internal temperature was about 60°C), 0.052 parts by mass of 2,2'-azobis(isobutyronitrile) was added as an initiator. During polymerization, the temperature of the water bath was adjusted as appropriate to maintain reflux from the cooling tube, and sampling was performed to check the progress of polymerization from the solid concentration. When the conversion ratio of vinyl acetate reached 50%, the polymerization was terminated by adding 0.013 parts by mass of m-dinitrobenzene and 500 parts by mass of methanol as polymerization terminators. It took 5 hours from the addition of the initiator to reach the target conversion ratio.

Methanol and vinyl acetate were distilled off under reduced pressure from the resulting solution after polymerization. When the viscosity increased as appropriate, methanol was added to expel the remaining vinyl acetate to obtain a methanol solution of polyvinyl acetate.

The resulting methanol solution of polyvinyl acetate was diluted with methanol to a concentration of 6% by mass, and 2000 parts by mass of this polyvinyl acetate methanol solution (120 parts by mass as polyvinyl acetate) was charged in the same reactor as above. The reactor was immersed in a water bath and heated to an internal temperature of 50°C. A saponification reaction was initiated by adding 128 parts by mass of a methanol solution of 3.5% by mass sodium hydroxide. As the saponification reaction progressed, a saponification product precipitated, but stirring was continued. The saponification product obtained 2.5 hours after the addition of the methanol solution of sodium hydroxide was filtered off and charged to a reactor again, to which 700 parts by mass of methanol was added and heated to 50°C. To this, 96 parts by mass of a methanol solution of 3.5% by mass sodium hydroxide was added and allowed to react for 4 hours to drive the saponification reaction. Then, 6.0 parts by mass of acetic acid was added for neutralization, and the saponification product was obtained by suction filtration while washing with methanol. The operation of washing the resulting saponification product with 1200 parts by mass of methanol at 50°C for 30 minutes and filtering off was performed twice. The saponification product after washing was dried in a vacuum dryer at 50°C for 12 hours to obtain a polyvinyl alcohol resin (A'1) (petroleum-derived PVA resin) (weight average molecular weight 79400; biomass content 0%; saponification degree 99.8 mol%).

[Example 1]

To 100 parts by mass of the polyvinyl alcohol resin (A), which was a mixture of the polyvinyl alcohol resin (A1) (biologically derived PVA resin) and the polyvinyl alcohol resin (A'1) (petroleum-derived PVA resin) obtained in Synthetic Examples above at a mass ratio of 60:40, 12 parts by mass of glycerin (FUJIFILM Wako Pure Chemical Corporation, reagent special grade) was added as the plasticizer (B) to prepare a composition, to which ion-exchanged water was added so that the concentration of the composition was 19% by mass. The composition was dissolved at 130°C for 1 hour using an autoclave to obtain an aqueous solution of the polyvinyl alcohol resin composition.

The aqueous solution of the polyvinyl alcohol resin composition was applied to a chrome-plated stainless steel plate on a hot plate heated to 90°C using an applicator (coating width 150 mm) so that the film thickness after drying was 45 μm. The film was dried on the hot plate at 90°C for 2.5 minutes and then peeled. The film was then subjected to heat treatment in a dryer at 120°C for 1 minute, resulting in a polyvinyl alcohol resin film (1) with a thickness of 45 μm.

[Example 2]

A polyvinyl alcohol resin film (2) was obtained in the same procedure as in Example 1 except that the polyvinyl alcohol resin (A1) (biologically derived PVA resin) and the polyvinyl alcohol resin (A'1) (petroleum-derived PVA resin) obtained in the above Synthetic Examples were mixed at a mass ratio of 70:30.

[Example 3]

A polyvinyl alcohol resin film (3) was obtained in the same procedure as in Example 1 except that the polyvinyl alcohol resin (A1) (biologically derived PVA resin) and the polyvinyl alcohol resin (A'1) (petroleum-derived PVA resin) obtained in the above Synthetic Examples were mixed at a mass ratio of 80:20.

[Example 4]

A polyvinyl alcohol resin film (4) was obtained in the same procedure as in Example 1 except that the polyvinyl alcohol resin (A1) (biologically derived PVA resin) and the polyvinyl alcohol resin (A'1) (petroleum-derived PVA resin) obtained in the above Synthetic Examples were mixed at a mass ratio of 10:90.

[Example 5]

A polyvinyl alcohol resin film (5) was obtained in the same procedure as in Example 1 except that the polyvinyl alcohol resin (A1) (biologically derived PVA resin) and the polyvinyl alcohol resin (A'1) (petroleum-derived PVA resin) obtained in the above Synthetic Examples were mixed at a mass ratio of 25:75.

[Comparative Example 1]

To 100 parts by mass of the polyvinyl alcohol resin (A'1) (petroleum-derived PVA resin) obtained in Synthetic Example above, 12 parts by mass of glycerin (FUJIFILM Wako Pure Chemical Corporation, reagent special grade) was added as the plasticizer (B) to prepare a composition, to which ion-exchanged water was added so that the concentration of the composition was 19% by mass. The composition was dissolved at 130°C for 1 hour using an autoclave to obtain an aqueous solution of the polyvinyl alcohol resin composition.

The aqueous solution of the polyvinyl alcohol resin composition was applied to a chrome plate on a hot plate heated to 90°C using an applicator (coating width 150 mm) so that the film thickness after drying was 45 μm. The film was dried on the hot plate at 90°C for 2.5 minutes and then peeled. The film was then subjected to heat treatment in a dryer at 120°C for 1 minute, resulting in a polyvinyl alcohol resin film (1') with a thickness of 45 μm.

The total haze was measured using the polyvinyl alcohol resin films (1) to (3) and (1') obtained above. The peeling strength was measured using the aqueous solutions of polyvinyl alcohol resin compositions obtained above. The results are shown in Table 1 below.

Table 1

|  | Ex. 1 | Ex. 2 | Ex. 3 | Comp. Ex.1 |
|---|---|---|---|---|
| Polyvinyl alcohol resin (A1) (Biologically derived PVA resin) (parts by mass) | 60 | 70 | 80 | 0 |
| Polyvinyl alcohol resin (A'1) (Petroleum-derived PVA resin) (parts by mass) | 40 | 30 | 20 | 100 |
| Polyvinyl alcohol resin film | (1) | (2) | (3) | (1') |
| Total haze (%) | 1.52 | 1.59 | 1.73 | 1.95 |
| Peeling strength (N/m) | 4.35 | 4.4 | 4.24 | 4.5 |

The polyvinyl alcohol resin (A) used to produce the polyvinyl alcohol resin films of Examples 1 to 3 has a biomass content greater than 0% as measured by ASTM D6866 Method B and contains radiocarbon C14. Thus, the obtained films had excellent releasability and excellent transparency with a film haze of 1.9 or less.

In contrast, the polyvinyl alcohol resin (A) used to produce the polyvinyl alcohol resin film of Comparative Example 1 has a biomass content of 0% as measured by ASTM D6866 Method B and contains no radiocarbon C14. This indicates that the polyvinyl alcohol resin film has poor releasability and has poor transparency with a total haze of 1.9 or more.

The total haze was measured using the polyvinyl alcohol resin films (4), (5), and (1') obtained above. The tensile test of the film was performed using the polyvinyl alcohol resin aqueous solutions obtained above, and the difference between breaking strength and yield strength was calculated. The results are shown in Table 2 below.

Table 2

|  | Ex. 4 | Ex. 5 | Comp. Ex.1 |
|---|---|---|---|
| Polyvinyl alcohol resin (A1) (Biologically derived PVA resin) (parts by mass) | 10 | 25 | 0 |
| Polyvinyl alcohol resin (A'1) (Petroleum-derived PVA resin) (parts by mass) | 90 | 75 | 100 |
| Polyvinyl alcohol resin film | (4) | (5) | (1') |
| Total haze (%) | 1.21 | 1.25 | 1.95 |
| Difference between breaking strength and yield strength (N/mm2) | 7.8 | 8.6 | 2.1 |

The polyvinyl alcohol resin (A) used to produce the polyvinyl alcohol resin films of Examples 4 and 5 has a biomass content greater than 0% as measured by ASTM D6866 Method B and contains radiocarbon C14. Thus, the obtained films had excellent stretchability with a large difference between breaking strength and yield strength and excellent transparency with a film haze of 1.9 or less.

In contrast, the polyvinyl alcohol resin (A) used to produce the polyvinyl alcohol resin film of Comparative Example 1 has a biomass content of 0% as measured by ASTM D6866 Method B and contains no radiocarbon C14. This indicates that the polyvinyl alcohol resin film has poor stretchability with a small difference between breaking strength and yield strength and has poor transparency with a total haze of 1.9 or more.

While specific forms of the embodiments of the present disclosure have been shown in the above examples, the examples are merely illustrative and should not be interpreted in a limited sense. Modifications apparent to those skilled in the art are intended to be included in the scope of the present disclosure.

INDUSTRIAL APPLICABILITY

The polyvinyl alcohol resin film according to the present disclosure is useful for optical applications such as optical films, for film and package applications with excellent appearance, and for water-soluble films. In particular, a polarizing film obtained from the polyvinyl alcohol resin film is free from color unevenness and has excellent in-plane uniformity of polarizing performance, and can be preferably used in, for example, portable information terminals, personal computers, TVs, projectors, signage, electronic desktop computers, electronic clocks, word processors, electronic paper, game machines, videos, cameras, photo albums, thermometers, audio equipment, and liquid crystal displays for meters and gauges for automobiles and machinery instruments, sunglasses, anti-glare glasses, 3D glasses, wearable displays, antireflection layers for display devices (CRT, LCD, organic EL, electronic paper, etc.), optical communication devices, medical devices, construction materials, toys, and the like.

**Claims**

1.    A polyvinyl alcohol resin film comprising:

a polyvinyl alcohol resin (A),
wherein the polyvinyl alcohol resin (A) comprises radiocarbon C14, and the polyvinyl alcohol resin film has a total haze of 1.9 or less.

2.    The polyvinyl alcohol resin film according to claim 1, wherein the polyvinyl alcohol resin (A) has a saponification degree of 80 to 99.9 mol%.

3. The polyvinyl alcohol resin film according to claim 1 or 2, wherein the polyvinyl alcohol resin (A) has a weight average molecular weight of 20000 to 150000.

4. The polyvinyl alcohol resin film according to any one of claims 1 to 3, further comprising a plasticizer (B).

5. The polyvinyl alcohol resin film according to claim 4, wherein the plasticizer (B) is contained in an amount of 1 to 45 parts by mass per 100 parts by mass of the polyvinyl alcohol resin (A).

6. The polyvinyl alcohol resin film according to any one of claims 1 to 5, wherein the polyvinyl alcohol resin film has a thickness of 10 to 130 $\mu$m.

7. The polyvinyl alcohol resin film according to any one of claims 1 to 6, wherein the polyvinyl alcohol resin film is configured for polarizing film manufacturing applications.

8. An optical film comprising the polyvinyl alcohol resin film according to any one of claims 1 to 7.

9. The optical film according to claim 8, wherein the optical film is a polarizing film.

10. A water-soluble film comprising the polyvinyl alcohol resin film according to any one of claims 1 to 6.

11. A polyvinyl alcohol resin composition comprising:

a polyvinyl alcohol resin (A),
wherein the polyvinyl alcohol resin (A) comprises radiocarbon C14, and
wherein a film obtained by forming a film by casting the polyvinyl alcohol resin composition has a total haze value of 1.9 or less.

12. The polyvinyl alcohol resin composition according to claim 11, further comprising a plasticizer (B).

13. A polyvinyl alcohol resin film comprising the polyvinyl alcohol resin composition according to claim 11 or 12.

## INTERNATIONAL SEARCH REPORT

| International application No. |
| --- |
| **PCT/JP2024/006963** |

| | |
| --- | --- |
| **A. CLASSIFICATION OF SUBJECT MATTER** | |

*C08J 5/18*(2006.01)i; *C08F 8/12*(2006.01)i; *C08F 16/06*(2006.01)i; *C08L 29/04*(2006.01)i; *G02B 5/30*(2006.01)i
FI: C08J5/18 CEX; C08F8/12; C08F16/06; C08L29/04 A; G02B5/30

According to International Patent Classification (IPC) or to both national classification and IPC

| | |
| --- | --- |
| **B. FIELDS SEARCHED** | |

Minimum documentation searched (classification system followed by classification symbols)

C08J5/00-5/02; C08J5/12-5/22; C08C19/00-19/44; C08F6/00-246/00; C08F301/00; C08K3/00-13/08; C08L1/00-101/14; G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C. DOCUMENTS CONSIDERED TO BE RELEVANT** | |

| Category* | Citation of document, with indication, where appropriate, of the relevant passages | Relevant to claim No. |
| --- | --- | --- |
| X | JP 7072129 B1 (KURARAY CO., LTD.) 19 May 2022 (2022-05-19)<br>claims 1, 4, 6-7, 10-11, paragraphs [0030], [0040]-[0042], [0048]-[0049], examples | 1-13 |
| A | JP 2022-032037 A (KURARAY CO., LTD.) 24 February 2022 (2022-02-24)<br>entire text, all drawings | 1-13 |
| A | JP 2021-518873 A (BRASKEM S.A.) 05 August 2021 (2021-08-05)<br>entire text, all drawings | 1-13 |
| A | US 2011/0287204 A1 (ARKEMA FRANCE) 24 November 2011 (2011-11-24)<br>entire text, all drawings | 1-13 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/006963**

| Patent document cited in search report | | | Publication date (day/month/year) | Patent family member(s) | | | Publication date (day/month/year) |
|---|---|---|---|---|---|---|---|
| JP | 7072129 | B1 | 19 May 2022 | US | 2022/0348757 | A1 | |
| | | | | claims 1, 4, paragraphs [0034], [0044]-[0045], [0051]-[0052], examples | | | |
| | | | | WO | 2022/080472 | A1 | |
| | | | | EP | 4071080 | A1 | |
| | | | | KR | 10-2022-0100871 | A | |
| | | | | CN | 114901734 | A | |
| JP | 2022-032037 | A | 24 February 2022 | US | 2023/0250269 | A1 | |
| | | | | entire text, all drawings | | | |
| | | | | WO | 2022/004701 | A1 | |
| | | | | EP | 4173823 | A1 | |
| | | | | TW | 202206469 | A | |
| | | | | CN | 115715308 | A | |
| | | | | KR | 10-2023-0030654 | A | |
| JP | 2021-518873 | A | 05 August 2021 | US | 2019/0315948 | A1 | |
| | | | | entire text, all drawings | | | |
| | | | | WO | 2019/202405 | A1 | |
| | | | | EP | 3619259 | A1 | |
| | | | | CN | 112204090 | A | |
| | | | | KR | 10-2021-0005886 | A | |
| US | 2011/0287204 | A1 | 24 November 2011 | WO | 2010/055257 | A1 | |
| | | | | entire text, all drawings | | | |
| | | | | EP | 2346911 | A1 | |

Form PCT/ISA/210 (patent family annex) (July 2022)

**EP 4 674 900 A1**

**REFERENCES CITED IN THE DESCRIPTION**

**Patent documents cited in the description**

- JP 2006308938 A
- JP 2012082313 A
- WO 2019189684 A